# EUROPÄISCHE PATENTSCHRIFT

(11) **EP 1 745 984 B1**
(45) Veröffentlichungstag und Bekanntmachung des Hinweises auf die Patenterteilung: **27.02.2008**
(21) Anmeldenummer: 06009496.8
(22) Anmeldetag: 09.05.2006
(51) Int. Cl.: B60R 13/10

(54) **Kennzeichenhalter für ein Kraftfahrzeug**
Licence plate holder for a vehicle
Support d'immatriculation pour véhicule

(30) Priorität: 20.07.2005 DE 102005033873
(43) Veröffentlichungstag der Anmeldung: 24.01.2007
(73) Patentinhaber: Dr.Ing. h.c. F. Porsche Aktiengesellschaft, 70435 Stuttgart (DE)
(72) Erfinder: Beer, Adrian, 71032 Böblingen (DE); Keller, Markus, 71229 Leonberg (DE); Kruschhausen, Heinz-Arno, 75446 Wiernsheim (DE)

(56) Entgegenhaltungen:
- DE-U1- 20 120 823
- US-A- 3 685 188
- US-A- 4 917 426
- US-B1- 6 167 645

## Beschreibung

Die Erfindung betrifft einen Kennzeichenhalter für ein Kraftfahrzeug zum Haltern eines Fahrzeugkennzeichens am Fahrzeug. Die Erfindung betrifft außerdem ein mit einem derartigen Kennzeichenhalter ausgestattetes Fahrzeug.

In den meisten Staaten müssen Kraftfahrzeuge zugelassen werden, um sie im Straßenverkehr verwenden zu dürfen. Hierzu erhält das Fahrzeug ein Fahrzeugkennzeichen, das auch als Nummernschild bezeichnet wird. Zur Anbringung des Fahrzeugkennzeichens sind die Fahrzeuge daher mit wenigstens einem Kennzeichnungsbereich ausgestattet, in dem das jeweilige Fahrzeugkennzeichen am Fahrzeug befestigt werden kann. Dabei ist es grundsätzlich möglich, das jeweilige Fahrzeugkennzeichen direkt am Fahrzeug zu befestigen. Bei modernen Fahrzeugen ist jedoch die Verwendung eines Kennzeichenhalters der eingangs genannten Art üblich. Ein derartiger Kennzeichenhalter ist im Kennzeichnungsbereich am Fahrzeug befestigt. Das jeweilige Fahrzeugkennzeichen wird dann an diesem Kennzeichenhalter befestigt und ist in der Folge nicht mehr direkt, sondern nur noch indirekt über den Kennzeichenhalter am Fahrzeug befestigt.

Aus der US 3,685,188 ist ein Fahrzeugkennzeichen bekannt, das mit abschließbaren Befestigungseinrichtungen ausgestattet ist. Mit Hilfe dieser Befestigungseinrichtungen kann das Fahrzeugkennzeichen direkt am Fahrzeug befestigt werden. Die Befestigungseinrichtungen sind nach Art von Schließzylindern ausgestaltet, die mit Hilfe eines Schlüssels zwischen einer Schließstellung und einer Offenstellung schaltbar sind. Bei einer ersten Ausführungsform sind in der Schließstellung Zapfen radial nach außen verdrängt, wodurch diese einen Wandabschnitt des Fahrzeugs hintergreifen. In der Offenstellung sind diese Zapfen radial so weit nach innen verstellt, dass der jeweilige Schließzylinder aus besagtem Wandabschnitt herausziehbar ist. Bei einer zweiten Ausführungsform ist der Schließzylinder mit einem radial abstehenden Ansatz ausgestattet, der in der Schließstellung einen Wandabschnitt des Fahrzeugs hintergreift und in der Offenstellung zu einem Schlitz fluchtet, der im Wandabschnitt angeordnet ist und komplementär zum Ansatz geformt ist. Dementsprechend ist der Schließzylinder in der Offenstellung aus besagter Wand herausziehbar. Zur Realisierung einer derartigen, lösbaren Befestigung des Fahrzeugkennzeichens am Fahrzeug ist das Fahrzeug im Kennzeichnungsbereich mit entsprechenden Schließzylinderaufnahmen ausgestattet, die bei entferntem Fahrzeugkennzeichen sichtbar sind.

Die Gesetze zur Kennzeichnung von Fahrzeugen können sich von Land zu Land voneinander unterscheiden. Beispielsweise können unterschiedliche Größen für die Fahrzeugkennzeichen vorgeschrieben sein. Des Weiteren kann die Positionierung des jeweiligen Kennzeichnungsbereichs am Fahrzeug unterschiedlich vorgeschrieben sein. Ebenso kann die Anzahl der am Fahrzeug anzubringenden Fahrzeugkennzeichen unterschiedlich sein. So ist es beispielsweise in vielen Ländern Pflicht, sowohl vorn als auch hinten am Fahrzeug jeweils ein Fahrzeugkennzeichen anzubringen. Gleichzeitig gibt es Länder, bei denen das Fahrzeug vorne kein Fahrzeugkennzeichen aufweisen muss. Ein Kennzeichnungsbereich, der am Fahrzeug als solcher erkennbar ist, kann in Ländern, in denen er nicht benötigt wird, den ästhetischen Eindruck des Fahrzeugs beeinträchtigen.

Aus der US 6,167,645 ist ein Kennzeichenhalter bekannt, der über Haken (34) und selbstschneidende Schrauben (44) auf der Kühlergrille (12) fixiert ist. Zur Realisierung einer derartigen, lösbaren Befestigung des Kennzeichenhalters, sind Löchern erforderlich, die die dünner Teile der Kühlergrille brechen können, und bei entfertem Kennzeichenhalter sichtbar sind.

Die vorliegende Erfindung beschäftigt sich mit dem Problem, für die Anbringung von Fahrzeugkennzeichen am Fahrzeug einen vorteilhaften Weg aufzuzeigen, der insbesondere ein nachträgliches Montieren des Kennzeichenhalters am Fahrzeug vereinfacht, und den ästhetischen Eindruck verbessert.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den Kennzeichenhalter mit wenigstens einer Befestigungseinrichtung auszustatten, die zum Festlegen einer zur Anbringung des Fahrzeugkennzeichens vorgesehenen Trägerplatte im Kennzeichnungsbereich am Fahrzeug ein Sicherungsteil aufweist, das drehbar an einem Basisteil der Befestigungseinrichtung gelagert ist und in einer Sicherungsstellung eine fahrzeugfeste Haltekontur hintergreift. In einer Ausgangsstellung des Sicherungsteils kommt es von der Haltekontur frei und fluchtet mit einer Öffnung, durch die hindurch das Sicherungsteil relativ zur Haltekontur positionierbar ist. Der Kennzeichenhalter lässt sich auf diese Weise besonders einfach nachträglich am Fahrzeug montieren. Dabei können insbesondere fahrzeugfeste Bereiche, die sich ohnehin am Fahrzeug befinden, als Haltekontur dienen. Der fahrzeugseitige Aufwand zur Realisierung einer Befestigungsmöglichkeit für das Fahrzeugkennzeichen mit Hilfe des Kennzeichenhalters ist dadurch minimal. Außerdem kann bei einer solchen Ausführungsform der Kennzeichnungsbereich des Fahrzeugs bei fehlendem Kennzeichenhalter als solcher nicht erkannt werden.

Gemäß einer vorteilhaften Ausführungsform kann das Sicherungsteil in seiner Sicherungsstellung mittels einer Schraube am Basisteil bezüglich der Drehachse axial fixiert sein. Die jeweilige Befestigungseinrichtung umfasst somit neben dem an der Trägerplatte angebrachten Basisteil und dem Sicherungsteil ein drittes Teil, nämlich die Schraube, mit deren Hilfe die beiden anderen Teile axial aneinander befestigt sind. Die Befestigungseinrichtung lässt sich dadurch extrem preiswert realisieren.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine vereinfachte, perspektivische Draufsicht auf ein Kraftfahrzeug im Bereich eines Kühlergrills,
- Fig. 2: eine vereinfachte Schnittdarstellung eines Kennzeichenhalters, entsprechend Schnittlinien II in Fig. 1,
- Fig. 3: eine perspektivische Ansicht auf ein Basisteil einer Befestigungseinrichtung,
- Fig. 4: eine perspektivische Ansicht auf ein Sicherungsteil der Ausführungsform gemäß Fig. 3,
- Fig. 5 bis 7: perspektivische Ansichten auf die Befestigungseinrichtung gemäß den Fig. 3 und 4 bei unterschiedlichen Zuständen,
- Fig. 8 bis 11: perspektivische Ansichten auf eine Befestigungseinrichtung bei unterschiedlichen Zuständen wie in den Fig. 5 und 7, jedoch bei einer anderen Ausführungsform.

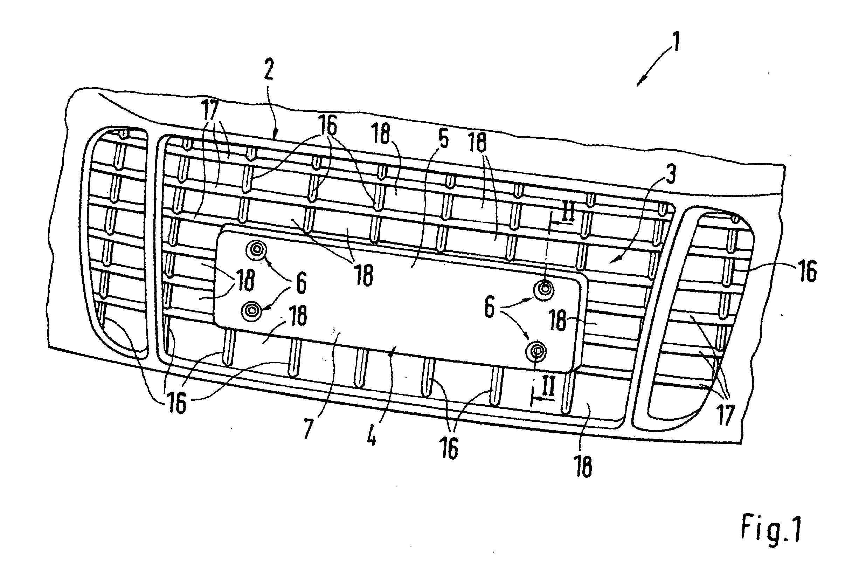

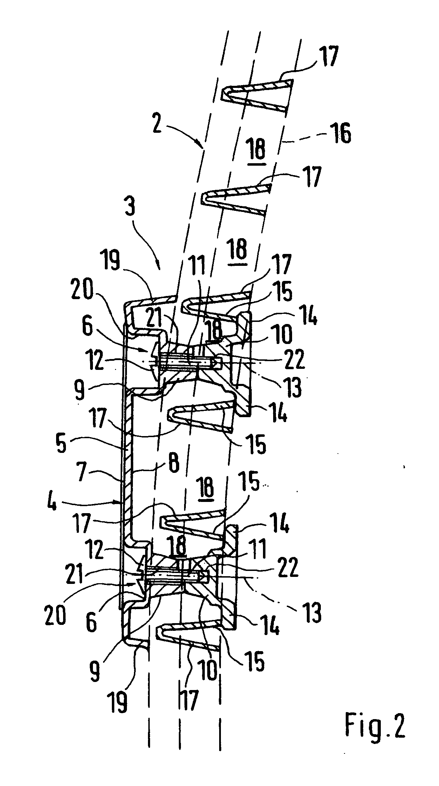

Entsprechend Fig. 1 umfasst ein Fahrzeug 1, das hier nur im Bereich eines frontseitigen Kühlergrills 2 gezeigt ist, zumindest einen Kennzeichnungsbereich 3. Dieser Kennzeichnungsbereich 3 dient zur Anbringung eines hier nicht gezeigten Fahrzeugkennzeichens (Nummernschild) am Fahrzeug 1. Die Anbringung des Fahrzeugkennzeichens am Fahrzeug 1 erfolgt hier nicht direkt, sondern indirekt mittels eines Kennzeichenhalters 4, der im Kennzeichnungsbereich 3 am Fahrzeug 1 befestigt ist. Dieser Kennzeichenhalter 4 umfasst eine Trägerplatte 5 sowie wenigstens eine Befestigungseinrichtung 6. Die Trägerplatte 5 weist eine im montierten Zustand vom Kennzeichnungsbereich 3 abgewandte Vorderseite 7 und eine im montierten Zustand dem Kennzeichnungsbereich 3 zugewandte Rückseite 8 auf (vergleiche Fig. 2). Die Trägerplatte 5 ist so dimensioniert, dass an ihrer Vorderseite 7 das jeweilige Fahrzeugkennzeichen befestigt werden kann. Zur Befestigung des Fahrzeugkennzeichens kann die Trägerplatte 5 mit geeigneten Befestigungsmitteln ausgestattet sein. Beispielsweise kann das Fahrzeugkennzeichen an der Trägerplatte 5 angeschraubt, angeklebt oder angeclipst werden.

Bei der gezeigten, bevorzugten Ausführungsform sind mehrere, nämlich vier Befestigungseinrichtungen 6 vorgesehen, um die Trägerplatte 5 am Fahrzeug 1 zu befestigen.

Entsprechend Fig. 2 umfasst jede Befestigungseinrichtung 6 ein Basisteil 9 und ein Sicherungsteil 10. Außerdem kann wie hier zusätzlich eine Schraube 11 mit Kopf 12 vorgesehen sein. Das Basisteil 9 ist fest an der Trägerplatte 5 angeordnet, insbesondere einstückig mit dieser hergestellt. Die Befestigungseinrichtungen 6 sind an der Rückseite 8 der Trägerplatte 5 ausgebildet und stehen von dieser ab. Das jeweilige Sicherungsteil 10 ist um eine Drehachse 13 drehbar am jeweiligen Basisteil 9 angeordnet. Zumindest im montierten Zustand gemäß Fig. 2 ist bei jeder Befestigungseinrichtung 6 das Sicherungsteil 10 mit Hilfe der Schraube 11 relativ zum Basisteil 9 axial festgelegt.

Das jeweilige Sicherungsteil 10 weist beabstandet zur Trägerplatte 5 zumindest einen radial abstehenden Halter 14 auf. Bei den gezeigten Ausführungsformen weist das Sicherungsteil 10 jeweils zwei solche Halter 14 auf, die bezüglich der Drehachse 13 diametral angeordnet sind.

Bei nicht am Fahrzeug montiertem Kennzeichenhalter 4 bzw. bei nicht am Basisteil 9 mittels der Schraube 11 fixiertem Sicherungsteil 10 kann das jeweilige Sicherungsteil 10 relativ zum Basisteil 9 um die Drehachse 13 zwischen einer Ausgangsstellung und der in Fig. 2 wiedergegebenen Sicherungsstellung verschwenkt werden. In der Sicherungsstellung hintergreifen die Halter 14 jeweils eine fahrzeugfeste Haltekontur 15, um auf diese Weise die Trägerplatte 5 am Fahrzeug 1 zu befestigen. Diese Sicherungsstellung des Sicherungsteils 10 kann dann mit Hilfe der Schraube 11 gesichert werden, in dem die Schraube 11 entsprechend angezogen wird. Hierbei ist es grundsätzlich möglich, das Sicherungsteil 10 mit Hilfe der Schraube 11 am Basisteil 9 axial zu verspannen, derart, dass eine hinreichende Drehsicherung des Sicherungsteils 10 gewährleistet ist. Zusätzlich oder alternativ kann durch Anziehen der Schraube 11 die jeweilige Haltekontur 15 zwischen den Haltern 14 und der Trägerplatte 5 axial eingespannt werden, derart, dass sich auch dadurch eine hinreichende Drehsicherung für das Sicherungsteil 10 ausbildet.

Vorzugsweise ist der Kennzeichnungsbereich 3 am Kühlergrill 2 bzw. an einem Teilbereich des Kühlergrills 2 vorgesehen. Der Kühlergrill 2 weist mehrere Vertikalstege 16 und mehrere Horizontalstege 17 auf, die ein für den Kühlergrill 2 charakteristisches Gitter bilden. Diese Streben 16, 17, insbesondere die Horizontalstreben 17 bilden die fahrzeugfeste Haltekontur 15. Im einzelnen ist die Haltekontur 15 durch von der Trägerplatte 5 abgewandte rückseitige Kanten der Horizontalstege 17 gebildet. Bei fehlendem Kennzeichenhalter 4 ist der Kennzeichnungsbereich 3 innerhalb des Kühlergrills 2 nicht erkennbar. Die Haltekonturen 15, gebildet durch die Horizontalstege 17, sind am Kühlergrill 2 ohnehin vorhanden, so dass der Kennzeichnungsbereich 3 bei fehlendem Kennzeichenhalter 4 nicht auffällt.

Zur Montage und Demontage des Kennzeichenhalters 4 können die Sicherungsteile 10 bezüglich ihrer Basisteile 9, vorzugsweise um etwa 90°, gedreht werden. Die Halter 14 erstrecken sich dann parallel zu den Horizontalstegen 17 und können dadurch besonders einfach durch Kühlerschlitze 18 hindurchgesteckt werden. Diese Kühlerschlitze 18 sind dabei jeweils von zwei benachbarten Vertikalstegen 16 und zwei benachbarten Horizontalstegen 17 eingefasst.

Da der Kühlergrill 2 insgesamt als Kennzeichnungsbereich 3 zur Verfügung steht, ist es grundsätzlich möglich, am Kühlergrill 2 unterschiedlich große Kennzeichenhalter 4 anzubringen, die entsprechend gesetzlicher Vorgaben an unterschiedlich große Fahrzeugkennzeichen adaptiert sind.

Entsprechend Fig. 2 kann der Kühlergrill 2 zumindest an einer dem Kennzeichenhalter 4 zugewandten Seite eine Krümmung aufweisen. Die Trägerplatte 5 ist an ihrer Rückseite 8 an diese Krümmung angepasst. Beispielsweise ist ein an der Rückseite 8 nach hinten abstehender Rand 19 der Trägerplatte 5 oben länger als unten. Ebenso können Senköffnungen 20 oben tiefer sein als unten. Durch diese Senköffnungen 20 kann die jeweilige Schraube 11 durch das Basisteil 9 in das Sicherungsteil 10 eingeschraubt werden, und zwar so, dass bei angezogener Schraube 11 der Schraubenkopf 12 in der Senköffnung 20 versenkt angeordnet ist. Bei am Kennzeichenhalter 4 montiertem Fahrzeugkennzeichen sind die Senköffnungen 20 vollständig abgedeckt. Die Befestigungseinrichtungen 6 sind dadurch von vorn unsichtbar und unzugänglich.

Die Vorderseite 7 der Trägerplatte 5 erstreckt sich im montierten Zustand vorzugsweise in einer Vertikalebene, so dass auch das Fahrzeugkennzeichen vertikal eben montiert werden kann.

Fig. 2 ist außerdem entnehmbar, dass sich die Schrauben 11 jeweils koaxial zur jeweiligen Drehachse 13 erstrecken. Dabei durchdringen die Schrauben 11 mit ihrem nicht näher bezeichneten Schaft jeweils eine im Basisteil 9 ausgebildete Durchgangsöffnung 21 und sind in eine am jeweiligen Sicherungsteil 10 ausgebildete Schrauböffnung 22 eingeschraubt. Die Schraubenköpfe 12 sind dabei von der Vorderseite 7 der Trägerplatte 5 her zugänglich, so dass der Kennzeichenhalter 4 von vorn am Fahrzeug 1 montierbar ist, was eine rasche und einfache Montage ermöglicht.

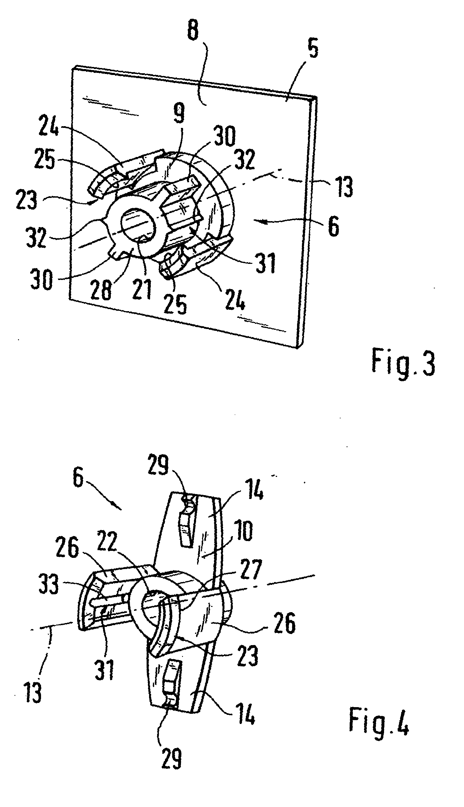

Im folgenden werden weitere Besonderheiten der Befestigungseinrichtungen 6 ohne Beschränkung der Allgemeinheit anhand eines speziellen Ausführungsbeispiels entsprechend den Fig. 3 bis 7 näher erläutert.

Vorzugsweise ist das Sicherungsteil 10 am Basisteil 9 verliersicher gehaltert, und zwar auch dann, wenn keine Schraube 11 eingeschraubt ist. Diese Verliersicherung kann vorzugsweise mit Hilfe einer Verclipsung 23 realisiert sein, welche das Sicherungsteil 10 am Basisteil 9 axial sichert. Diese Verclipsung 23 wird hier dadurch realisiert, dass das Basisteil 9 zumindest einen, hier zwei Clipsarme 24 aufweist, die in Richtung Sicherungsteil 10 axial abstehen und radial federelastisch sind. Jeder Clipsarm 24 weist radial innen eine Clipsnase 25 auf. Desweiteren ist das Sicherungsteil 10 mit zwei Hülsensegmenten 26 ausgestattet, die radial außen jeweils eine Clipskontur 27 aufweisen. Diese Clipskonturen 27 sind dabei komplementär zu den Clipsnasen 25 ausgestaltet, so dass die Clipsnasen 25 beim Aufstecken des Sicherungsteils 10 fluchtend zur Drehachse 13 auf das Basisteil 9 die Clipskonturen 27 hintergreifen.

Das Basisteil 9 ist außerdem mit einem Zylinderabschnitt 28 ausgestattet, der in Richtung Sicherungsteil 10 koaxial zur Drehachse 13 absteht. Dieser Zylinderabschnitt 28 enthält die Durchgangsbohrung 21. Auf diesen Zylinderabschnitt 28 sind die Hülsensegmente 26 des Sicherungsteils 10 aufsteckbar. Bei fehlender Schraube 11 ist das Sicherungsteil 10 am Basisteil 9 axial verstellbar gehaltert, wobei die Hülsensegmente 26 mit dem Hülsenabschnitt 28 eine Axialführung bilden.

Entsprechend Fig. 4 weisen die Halter 14 an einer dem Basisteil 9 zugewandten Unterseite jeweils eine Anlagefläche 29 auf, die komplementär zur Haltekontur 15 geformt sind. Auf diese Weise liegen die Halter 14 im montierten Zustand formschlüssig an den Haltekonturen 15 an.

Die Befestigungseinrichtungen 6 können für das Sicherungsteil 10 für die Ausgangsstellung und für die Sicherungsstellung jeweils einen Drehanschlag aufweisen.

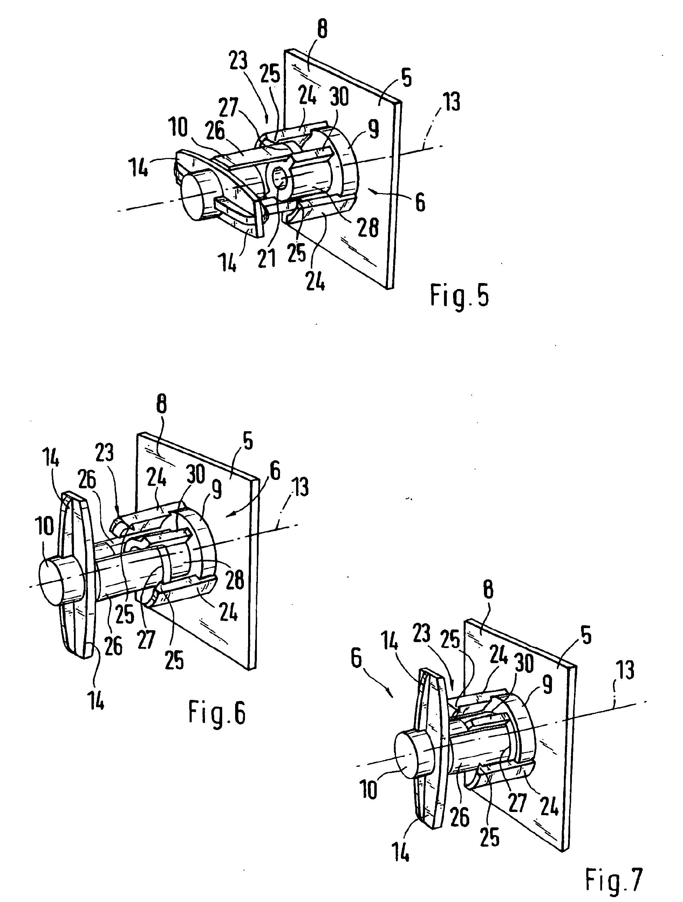

Bei der Ausführungsform der Fig. 3 bis 7 kann zur Realisierung dieser Drehanschläge am Zylinderabschnitt 28 zumindest ein Axialsteg 30 vorgesehen sein. Vorzugsweise sind zwei solche Axialstege 30 vorgesehen, die bezüglich der Drehachse 13 diametral gegenüberliegend angeordnet sind. Jeder Axialsteg 30 steht radial vom Zylinderabschnitt 28 ab und erstreckt sich parallel zur Drehachse 13. Mit diesen Axialstegen 30 wirken nun die Hülsensegmente 26 zur Ausbildung der Drehanschläge zusammen. Entsprechend Fig. 5 kommen die Hülsensegmente 26 in der Ausgangsstellung in der einen Drehrichtung an den Axialstegen 30 zur Anlage und bilden dadurch einen der Ausgangsstellung zugeordneten Drehanschlag. Entsprechend den Fig. 6 und 7 kommen die Hülsensegmente 26 in der Sicherungsstellung in der Gegendrehrichtung an den Axialstegen 30 zur Anlage und bilden dadurch den der Sicherungsstellung zugeordneten Drehanschlag.

Desweiteren können die Befestigungseinrichtungen 6 mit einer der Ausgangsstellung zugeordneten Drehverrastung 31 ausgestattet sein. Zur Realisierung dieser Drehverrastung 31 kann entsprechend den Fig. 3 und 4 der Zylinderabschnitt 28 mit wenigstens einer radial abstehenden Rastnase 32 ausgestattet sein. Im gezeigten Ausführungsbeispiel sind zwei derartige Rastnasen 32 vorgesehen, die bezüglich der Drehachse 13 diametral gegenüberliegend angeordnet sind. Diese Rastnasen 32 erstrecken sich beispielsweise parallel zur Drehachse 13 entlang des ganzen Zylinderabschnitts 28. Die Hülsensegmente 26 weisen an ihren dem Zylinderabschnitt 28 zugewandten Innenseiten jeweils eine Rastöffnung 33 auf, die komplementär zur jeweiligen Rastnase 32 geformt ist, also hier nach Art einer axialen Längsnut.

Mit Hilfe der Drehverrastung 31 kann die Ausgangsstellung des Sicherungsteils 10 im noch nicht montierten Zustand gesichert werden, um auf diese Weise die Montage des Kennzeichenhalters 4 zu vereinfachen. Die Drehverrastung 31 ist dabei so dimensioniert, dass sie beim Einschrauben der Schraube 11 überwunden wird. Durch eine entsprechende Relativlage zwischen Ausgangsstellung und Sicherungsstellung kann durch das Einschrauben der Schraube 11 das Sicherungsteil 10 automatisch in die Sicherungsstellung überführt werden.

### Die Montage des Kennzeichenhalters 4 am Fahrzeug funktioniert dabei wie folgt:

Zur Vorbereitung des Kennzeichenhalters 4 werden die Sicherungsteile 10 auf die Basisteile 9 aufgesteckt und in die Ausgangsstellung gemäß Fig. 5 überführt. In dieser Ausgangsstellung können die Sicherungsteile 10 mit Hilfe der zuvor beschriebenen Drehverrastung 31 gesichert sein. Desweiteren ist diese Relativlage durch den der Ausgangsstellung zugeordneten Drehanschlag, gebildet aus den Axialstegen 30 und den damit zusammenwirkenden Hülsensegmenten 26, definiert. Das Sicherungsteil 10 ist in axialer Richtung am Basisteil 9 frei beweglich, jedoch durch die Verclipsung 23 verliersicher am Basisteil 9 gehaltert.

Nach dem Positionieren des Kennzeichenhalters 4 im Kennzeichnungsbereich 3, z.B. durch Einführen der Befestigungseinrichtungen 6 in die Kühlerschlitze 18, werden die Schrauben 11 von der Vorderseite 7 der Trägerplatte 5 her durch die Durchgangsöffnungen 21 in die Schrauböffnungen 22 der Sicherungsteile 10 eingeschraubt. Beim Anziehen der Schrauben 11 wird die Haltekraft der Drehverrastung 31 überwunden. In der Folge dreht das Sicherungsteil 10 mit der Schraube 11 mit, bis das Sicherungsteil 10 seine Sicherungsstellung erreicht. Beim Verschwenken in die Sicherungsstellung hintergreifen die Halter 14 die Haltekontur 15 des Fahrzeugs. Diese Relativlage ist durch den der Sicherungsstellung zugeordneten Drehanschlag, gebildet durch das Zusammenspiel der Axialstege 30 und der Hülsensegmente 26, definiert. Dieser Zustand ist in Fig. 6 wiedergegeben.

Da das Sicherungsteil 10 durch den Drehanschlag in der Sicherungsstellung gesichert ist, führt ein weiteres Einschrauben der Schraube 11 dazu, dass sich das Sicherungsteil 10 axial auf das Basisteil 9 zubewegt. Hierdurch wird die Haltekontur 15 zwischen den Haltern 14 und der Trägerplatte 5 eingespannt. Dabei ist es grundsätzlich möglich, das Sicherungsteil 10 bis zum axialen Kontakt mit dem Basisteil 9 festzuschrauben. Fig. 7 zeigt den Endzustand, bei dem das Sicherungsteil 10 maximal an das Basisteil 9 axial angenähert ist.

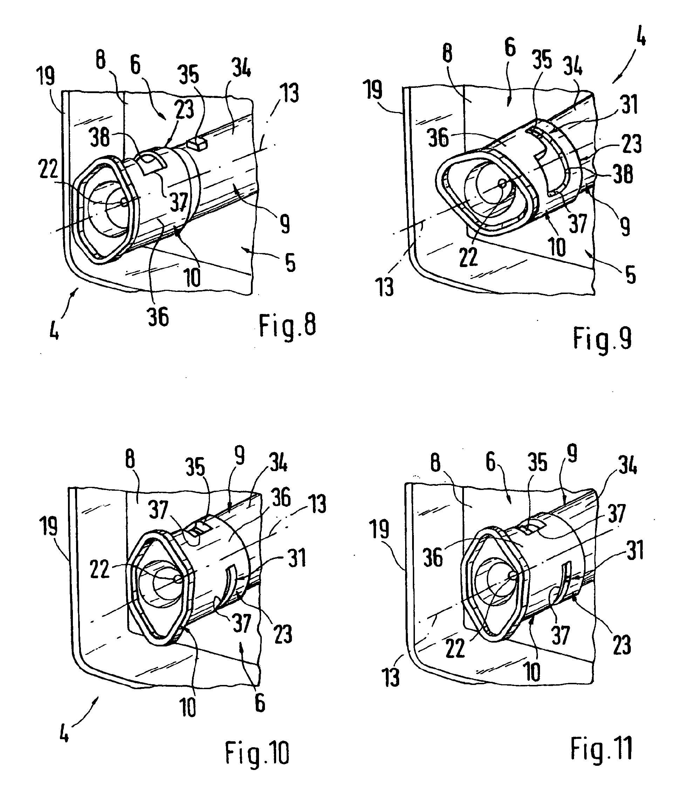

Bei einer in den Fig. 8 bis 11 gezeigten anderen Ausführungsform der Befestigungseinrichtungen 6 ist das jeweilige Basisteil 9 mit einem Zylinder 34 ausgestattet, der sich koaxial zur Drehachse 13 erstreckt. Dieser Zylinder 34 weist wenigstens einen Vorsprung 35 auf, der vom Zylinder 34 radial absteht. Vorzugsweise sind zwei derartige Vorsprünge 35 vorgesehen, die diametral gegenüberliegend am Zylinder 34 angeordnet sind. Das Sicherungsteil 10 besitzt eine Hülse 36, die außen auf den Zylinder 34 aufsteckbar ist. Für jeden Vorsprung 35 enthält die Hülse 36 eine Kulissenführung 37 in Form einer axial und umfangsmäßig begrenzten Aussparung der Hülse 36. Bei auf den Zylinder 34 aufgesteckter Hülse 36 ragt der jeweilige Vorsprung 35 radial in die jeweilige Kulissenführung 37 hinein. Auf diese Weise ist das Sicherungsteil 10 am Basisteil 9 verliersicher gehaltert und außerdem hinsichtlich seiner Drehbarkeit um die Drehachse 13 begrenzt.

Um das Aufstecken der Hülse 36 auf den Zylinder 34 zu vereinfachen, kann die Hülse 36 mit einer Einführschräge 38 ausgestattet sein. Diese ist an einem von den Haltern 14 entfernten, die Kulissenöffnung 37 begrenzenden Wandabschnitt ausgebildet. Diese Einführschräge 38 ist dabei so angeordnet, dass das Sicherungsteil 10 zum Aufstecken der Hülse 36 auf den Zylinder 34 relativ zum Basisteil 9 in eine Aufsteckstellung ausgerichtet werden muss, die zwischen der Ausgangsstellung und der Sicherungsstellung liegt.

Besagter Wandabschnitt der Kulissenöffnung 37 wirkt mit dem Vorsprung 35 außerdem zur Ausbildung einer axialen Ver-clipsung 23 zusammen.

Vorzugsweise sind die Kulissenöffnungen 37 so dimensioniert, dass sie mit den Vorsprüngen 35 zur Ausbildung eines der Ausgangsstellung zugeordneten Drehanschlags zusammenwirken. Darüber hinaus können die Kulissenführungen und die Vorsprünge 35 eine der Ausgangsstellung zugeordnete Drehverrastung 31 oder entsprechend andere bilden, welche die Ausgangsstellung bei fehlender Schraube 11 sichert. Entsprechend den Fig. 10 und 11 können die Kulissenöffnungen 37 mit den Vorsprüngen 35 auch zur Ausbildung eines der Sicherungsstellung zugeordneten Drehanschlags zusammenwirken.

Die in den Fig. 8 bis 11 gezeigte Ausführungsform funktioniert analog zu der in den Fig. 3 bis 7 gezeigten Ausführungsform. Somit kann diesbezüglich auf die vorstehende Funktionsbeschreibung verwiesen werden, wobei hinsichtlich der Funktionalität die Zustände der Fig. 5 bis 7 den Zuständen der Fig. 9 bis 11 entsprechen.

Es ist klar, dass einzelne Merkmale und Merkmalsgruppen der einen Ausführungsform entsprechend den Fig. 3 bis 7 mit einzelnen Merkmalen und Merkmalsgruppen der anderen Ausführungsform entsprechend den Fig. 8 bis 11 kombinierbar und/oder austauschbar sind.

## Patentansprüche

1. Kennzeichenhalter für ein Kraftfahrzeug (1) zum Haltern eines Fahrzeugkennzeichens am Fahrzeug (1),
- mit einer Trägerplatte (5), an der das Fahrzeugkennzeichen befestigbar ist,
- mit wenigstens einer Befestigungseinrichtung (6) zum Befestigen der Trägerplatte (5) am Fahrzeug (1) in einem für das Fahrzeugkennzeichen vorgesehenen Kennzeichnungsbereich (3),
- wobei die jeweilige Befestigungseinrichtung (6) ein an der Trägerplatte (5) fest angeordnetes Basisteil (9) aufweist, **dadurch gekennzeichnet daß** die jeweilige Befestigungseinrichtung ein am Basisteil (9) relativ dazu um eine Drehachse (13) drehbar angeordnetes Sicherungsteil (10) aufweist,
- wobei das Sicherungsteil (10) beabstandet zur Trägerplatte (5) wenigstens einen bezüglich der Drehachse (13) radial abstehenden Halter (14) aufweist,
- wobei das Sicherungsteil (10) zwischen einer Ausgangsstellung und einer Sicherungsstellung um die Drehachse (13) verschwenkbar ist,
- wobei der wenigstens eine Halter (14) dazu dient, zum Befestigen der Trägerplatte (5) am Fahrzeug (1) in der Sicherungsstellung eine fahrzeugfeste Haltekontur (15) zu hintergreifen. 20

2. Kennzeichenhalter nach Anspruch 1,
**dadurch gekennzeichnet,**
- **dass** bei am Fahrzeug (1) befestigter Trägerplatte (5) die Haltekontur (15) in der Sicherungsstellung zwischen dem wenigstens einen Halter (14) und der Trägerplatte (5) axial eingespannt ist, und/oder
- **dass** der jeweilige Halter (14) eine zur Haltekontur (15) komplementär geformte Anlagefläche (29) aufweist, und/oder
- **dass** der Kennzeichnungsbereich (3) an wenigstens einem Teil eines Kühlergrills (2) oder einer sonstigen Öffnung mit Vertikalstegen (16) und Horizontalstegen (17) vorgesehen ist, und/oder
- **dass** die Haltekontur (15) durch Stege (17, 18) eines Kühlergrills (2) gebildet ist, und/oder
- **dass** die Ausgangsstellung und die Sicherungsstellung um 90° zueinander verdreht sind, und/oder
- **dass** eine dem Kühlergrill (2) zugewandte Rückseite (8) der Trägerplatte (5) einer Krümmung einer der Trägerplatte (5) zugewandten Seite des Kühlergrills (2) angepasst ist, und/oder
- **dass** eine Rückseite (8) der Trägerplatte (5) gegenüber einer Vorderseite (7) der Trägerplatte (5) geneigt ist, derart, dass im montierten Zustand die zur Befestigung des Fahrzeugkennzeichens vorgesehene Vorderseite (7) in einer Vertikalebene liegt, und/oder
- **dass** die Trägerplatte (5) mit ein oder mehreren Befestigungseinrichtungen (6) ausgestattet ist.

3. Kennzeichenhalter nach Anspruch 1 oder 2,
**dadurch gekennzeichnet,**
- **dass** das Sicherungsteil (10) in seiner Sicherungsstellung mittels einer Schraube (11) am Basisteil (9) bezüglich der Drehachse (13) axial fixiert ist, und/oder
- **dass** sich die Schraube (11) koaxial zur Drehachse (13) erstreckt, und/oder
- **dass** die Schraube (11) einen Schraubenkopf (12) aufweist, der an einer im montierten Zustand des Kennzeichenhalters (4) vom Kennzeichnungsbereich (3) abgewandten Vorderseite (7) der Trägerplatte (5) zum Drehen der Schraube (11) zugänglich ist, und/oder
- **dass** das Basisteil (9) an einer im montierten Zustand des Kennzeichenhalters (4) dem Kennzeichnungsbereich (3) zugewandten Rückseite (8) der Trägerplatte (5) von dieser absteht, und/oder
- **dass** das Basisteil (9) eine Durchgangsöffnung (21) für die Schraube (11) aufweist, und/oder
- **dass** das Basisteil (9) an der Vorderseite (7) der Trägerplatte (5) eine Senköffnung (20) aufweist, in welcher ein Schraubenkopf (12) der Schraube (11) bei am Fahrzeug (1) befestigter Trägerplatte (5) versenkt angeordnet ist.

4. Kennzeichenhalter nach einem der Ansprüche 1 bis 3,
**dadurch gekennzeichnet,**
- **dass** das Sicherungsteil (10) am Basisteil (9) verliersicher gehaltert ist, und/oder
- **dass** das Sicherungsteil (10) am Basisteil (9) mittels einer bezüglich der Drehachse (13) axialen Verclipsung (23) gehaltert ist, und/oder
- **dass** das Sicherungsteil (10) mittels einer Schraube (11) am Basisteil (9) fixierbar ist und bei fehlender oder nicht angezogener Schraube (11) bezüglich der Drehachse (13) axial verstellbar am Basisteil (9) angeordnet ist.

5. Kennzeichenhalter nach einem der Ansprüche 1 bis 4,
**dadurch gekennzeichnet,**
- **dass** am Basisteil (9) und/oder am Sicherungsteil (10) einer der Ausgangsstellung zugeordneter Drehanschlag (30, 26; 35, 37) ausgebildet ist, und/oder
- **dass** am Basisteil (9) und/oder am Sicherungsteil (10) ein der Sicherungsstellung zugeordneter Drehanschlag (30, 26; 35, 37) ausgebildet ist, und/oder
- **dass** am Basisteil (9) und/oder am Sicherungsteil (10) eine der Ausgangsstellung zugeordnete Drehverrastung (31) oder als eine entsprechende Verrastung ausgebildet ist, und/oder
- **dass** die Drehverrastung (31) am Basisteil (9) oder am Sicherungsteil (10) wenigstens eine Rastöffnung (33) und am jeweils anderen Teil (9, 10) zumindest eine zur Rastöffnung (33) komplementäre Rastnase (32) aufweist, und/oder
- **dass** das Sicherungsteil (10) mittels einer Schraube (11) am Basisteil (9) fixierbar ist, wobei die Drehverrastung (31) so dimensioniert ist, dass sie durch Anziehen der Schraube (11) überwindbar ist.

6. Kennzeichenhalter nach einem der Ansprüche 1 bis 5,
**dadurch gekennzeichnet,**
- **dass** das Basisteil (9) einen Zylinder (34) aufweist, von dem wenigstens ein Vorsprung (35) radial absteht, und/oder
- **dass** das Sicherungsteil (10) eine auf den Zylinder (34) aufgesteckte Hülse (36) aufweist, die wenigstens eine axial und umfangsmäßig begrenzte Kulissenöffnung (37) aufweist, in welche der Vorsprung (35) radial hineinragt, und/oder
- **dass** die jeweilige Kulissenöffnung (37) so dimensioniert ist, dass sie mit dem zugehörigen Vorsprung (35) einen der Ausgangsstellung zugeordneten Drehanschlag und/oder einen der Sicherungsstellung zugeordneten Drehanschlag und/oder eine der Ausgangsstellung zugeordnete Drehverrastung (31) ausbildet.

7. Kennzeichenhalter nach einem der Ansprüche 1 bis 5,
**dadurch gekennzeichnet,**
- **dass** das Basisteil (9) einen Zylinderabschnitt (28) aufweist, von dem wenigstens ein Axialsteg (30) radial absteht, und/oder
- **dass** das Sicherungsteil (10) wenigstens zwei auf den Zylinderabschnitt (28) aufgesteckte Hülsensegmente (26) aufweist, von denen zumindest eines mit dem wenigstens einen Axialsteg (30) zur Ausbildung eines der Ausgangsstellung und/oder der Sicherungsstellung zugeordneten Drehanschlags zusammenwirkt, und/oder
- **dass** zumindest eines der Hülsensegmente (26) radial außen eine Clipskontur (27) aufweist, und/oder
- **dass** das Basisteil (9) zumindest einen axial abstehenden, radial federelastischen Clipsarm (24) aufweist, der radial innen eine zur Clipskontur (27) komplementäre Clipsnase (25) aufweist, welche die Clipskontur (27) hintergreift.

8. Fahrzeug, insbesondere Personenkraftwagen, mit wenigstens einem zur Anbringung eines Fahrzeugkennzeichens vorgesehenen Kennzeichnungsbereich (3), in dem ein Kennzeichenhalter (4) nach wenigstens einem der Ansprüche 1 bis 7 am Fahrzeug (1) befestigt ist.

9. Fahrzeug nach Anspruch 8,
**dadurch gekennzeichnet,**
- **dass** der Kennzeichnungsbereich (3) bei fehlendem Kennzeichenhalter (4) als solcher nicht erkennbar ist, und/oder
- **dass** die Haltekontur (15) des Fahrzeugs (1) durch ohnehin am Fahrzeug (1) befindliche fahrzeugfeste Bereiche gebildet ist, und/oder
- **dass** der Kennzeichnungsbereich (3) durch einen Kühlergrill (2) oder einen Teil des Kühlergrills (2) gebildet ist, dessen Streben (16, 17) als hintergreifbare Haltekontur (15) dienen, und/oder
- **dass** der Kennzeichenhalter (4) mit den in ihre Ausgangsstellung verstellten Sicherungsteilen (10) durch Kühlerschlitze (18) hindurchsteckbar ist, die jeweils durch benachbarte Vertikalstege (16) und benachbarte Horizontalstege (17) eingefasst sind.

## Claims

1. Registration plate holder for a motor vehicle (1) for holding a vehicle registration plate on the vehicle (1).
- having a support plate (5) to which the vehicle registration plate can be fastened,
- having at least one fastening device (6) for fastening the support plate (5) to the vehicle (1) in a registration plate region (3) provided for the vehicle registration plate,
- with the respective fastening device (6) having a base part (9) which is fixedly arranged on the support plate (5),
**characterized**
- **in that** the respective fastening device has a securing part (10) which is arranged on the base part (9) so as to be rotatable relative thereto about a rotational axis (13),
- with the securing part (10) having, at a distance from the support plate (5), at least one holder (14) which projects radially with respect to the rotational axis (13),
- with the securing part (10) being pivotable about the rotational axis (13) between a starting position and a securing position,
- with the at least one holder (14) serving to engage behind a holding contour (15), which is fixed to the vehicle, in order to fasten the support plate (5) to the vehicle (1) in the securing position.

2. Registration plate holder according to Claim 1,
**characterized**
- **in that**, when the support plate (5) is fastened to the vehicle (1), the holding contour (15) is, in the securing position, clamped axially between the at least one holder (14) and the support plate (5), and/or
- **in that** the respective holder (14) has a contact face (29) which is of complementary shape to the holding contour (15), and/or
- **in that** the registration plate region (3) is provided on at least one part of a cooler grille (2) or of some other opening with vertical webs (16) and horizontal webs (17), and/or
- **in that** the holding contour (15) is formed by webs (17, 18) of a cooler grille (2), and/or
- **in that** the starting position and the securing position are rotated 90° with respect to one another, and/or
- **in that** a rear side (8), which faces towards the cooler grille (2), of the support plate (5) is adapted to a curvature of a side, which faces towards the support plate (5), of the cooler grille (2), and/or
- **in that** a rear side (8) of the support plate (5) is inclined with respect to a front side (7) of the support plate (5), in such a way that, in the assembled state, the front side (7) which is provided for fastening the vehicle registration plate is situated in a vertical plane, and/or
- **in that** the support plate (5) is equipped with one or more fastening devices (6).

3. Registration plate holder according to Claim 1 or 2,
**characterized**
- **in that** the securing part (10), in its securing position, is fixed axially with respect to the rotational axis (13) to the base part (9) by means of a screw (11), and/or
- **in that** the screw (11) extends coaxially with respect to the rotational axis (13), and/or
- **in that** the screw (11) has a screw head (12) which is accessible for rotating the screw (11) at a front side (7), which faces away from the registration plate region (3) in the assembled state of the registration plate holder (4), of the support plate (5), and/or
- **in that** the base part (9), at a rear side (8), which faces towards the registration plate region (3) in the assembled state of the registration plate holder (4), of the support plate (5), projects from the latter, and/or
- **in that** the base part (9) has a passage opening (21) for the screw (11), and/or
- **in that** the base part (9) has, on the front side (7) of the support plate (5), a countersunk opening (20) in which a screw head (12) of the screw (11) is arranged in a countersunk fashion when the support plate (5) is fastened to the vehicle (1).

4. Registration plate holder according to one of Claims 1 to 3,
**characterized**
- **in that** the securing part (10) is captively held on the base part (9), and/or
- **in that** the securing part (10) is held on the base part (9) by means of a clip arrangement (23) which is axial with respect to the rotational axis (13), and/or
- **in that** the securing part (10) can be fixed by means of a screw (11) to the base part (9) and, when the screw (11) is not present or not tightened, is arranged on the base part (9) so as to be adjustable axially with respect to the rotational axis (13).

5. Registration plate holder according to one of Claims 1 to 4,
**characterized**
- **in that** a rotary stop (30, 26; 35, 37) which is assigned to the starting position is formed on the base part (9) and/or on the securing part (10), and/or
- **in that** a rotary stop (30, 26; 35, 37) which is assigned to the securing position is formed on the base part (9) and/or on the securing part (10), and/or
- **in that** a rotary latching arrangement (31) which is assigned to the starting position or as a corresponding latching arrangement is formed on the base part (9) and/or on the securing part (10), and/or
- **in that** the rotary latching arrangement (31) has at least one latching opening (33) on the base part (9) or on the securing part (10) and has at least one latching lug (32), which is complementary to the latching opening (33), on the in each case other part (9, 10), and/or
- **in that** the securing part (10) can be fixed by means of a screw (11) to the base part (9), with the rotary latching arrangement (31) being dimensioned such that it can be overcome by tightening the screw (11).

6. Registration plate holder according to one of Claims 1 to 5,
**characterized**
- **in that** the base part (9) has a cylinder (34) from which at least one projection (35) projects radially, and/or
- **in that** the securing part (10) has a sleeve (36) which is plugged onto the cylinder (34) and which has at least one slotted guide opening (37) which is delimited axially and peripherally into which the projection (35) projects radially, and/or
- **in that** the respective slotted guide opening (37) is dimensioned such that it, with the associated projection (35), forms a rotary stop which is assigned to the starting position and/or a rotary stop which is assigned to the securing position and/or a rotary latching arrangement (31) which is assigned to the starting position.

7. Registration plate holder according to one of Claims 1 to 5,
**characterized**
- **in that** the base part (9) has a cylinder section (28) from which at least one axial web (30) projects radially, and/or
- **in that** the securing part (10) has at least two sleeve segments (26) which are plugged onto the cylinder section (28), at least one of which sleeve segments (26) interacts with the at least one axial web (30) so as to form a rotary stop which is assigned to the starting position and/or the securing position, and/or
- **in that** at least one of the sleeve segments (26) has, radially at the outside, a clip contour (27), and/or
- **in that** the base part (9) has at least one axially projecting, radially resiliently elastic clip arm (24) which, radially at the inside, has a clip lug (25) which is complementary to and engages behind the clip contour (27).

8. Vehicle, in particular passenger vehicle, having at least one registration plate region (3) which is provided for attaching a vehicle registration plate and in which a registration plate holder (4) according to at least one of Claims 1 to 7 is fastened to the vehicle (1).

9. Vehicle according to Claim 8,
**characterized**
- **in that**, when the registration plate holder (4) is not present, the registration plate region (3) cannot be recognized as such, and/or
- **in that** the holding contour (15) of the vehicle (1) is formed by regions which are fixed to the vehicle and which are situated on the vehicle (1) in any case, and/or
- **in that** the registration plate region (3) is formed by a cooler grille (2) or a part of the cooler grille (2) whose struts (16, 17) serve as holding contours (15) which can be engaged behind, and/or
- **in that** the registration plate holder (4) can, with the securing parts (10) adjusted into their starting position, be passed through cooler slots (18) which are in each case enclosed by adjacent vertical webs (16) and adjacent horizontal webs (17).

## Revendications

1. Support de plaque d'immatriculation pour un véhicule automobile (1) destiné à fixer une plaque d'immatriculation de véhicule sur un véhicule (1),
- comprenant une plaque de support (5) sur laquelle la plaque d'immatriculation du véhicule peut être fixée,
- avec au moins un dispositif de fixation (6) pour fixer la plaque de support (5) sur le véhicule (1) dans une région d'immatriculation (3) prévue pour la plaque d'immatriculation du véhicule,
- le dispositif de fixation respectif (6) présentant une partie de base (9) disposée fixement sur la plaque de support (5), **caractérisé en ce que** le dispositif de fixation respectif présente une partie de fixation (10) disposée sur la partie de base (9) de manière rotative par rapport à celle-ci autour d'un axe de rotation (13),
- la partie de fixation (10) présentant, à distance de la plaque de support (5), au moins un organe de fixation (14) saillant radialement par rapport à l'axe de rotation (13),
- la partie de fixation (10) pouvant pivoter entre une position de départ et une position de fixation autour de l'axe de rotation (13),
- l'au moins un organe de fixation (14) servant à fixer la plaque de support (5) sur le véhicule (1) dans la position de fixation pour venir en prise par l'arrière avec un contour de fixation (15) fixé au véhicule.

2. Support de plaque d'immatriculation selon la revendication 1, **caractérisé en ce que**
- lorsque la plaque de support (5) est fixée sur le véhicule (1), le contour de fixation (15) est serré axialement dans la position de fixation entre l'au moins un organe de fixation (14) et la plaque de support (5), et/ou
- **en ce que** l'organe de fixation respectif (14) présente une surface d'appui (29) de forme complémentaire au contour de fixation (15) et/ou
- **en ce que** la région d'immatriculation (3) est prévue sur au moins une partie d'une grille de refroidissement (2) ou d'une autre ouverture avec des nervures verticales (16) et des nervures horizontales (17), et/ou
- **en ce que** le contour de fixation (15) est formé par des nervures (17, 18) d'une grille de refroidissement (2) et/ou
- **en ce que** la position de départ et la position de fixation sont tournées de 90° l'une par rapport à l'autre, et/ou
- **en ce qu'**un côté arrière (8) de la plaque de support (5), tourné vers la grille de refroidissement (2), est adapté à une courbure d'un côté de la grille de refroidissement (2) tourné vers la plaque de support (5), et/ou
- **en ce qu'**un côté arrière (8) de la plaque de support (5) est incliné par rapport à un côté avant (7) de la plaque de support (5) de telle sorte que dans l'état monté, le côté avant (7) prévu pour fixer la plaque d'immatriculation du véhicule se situe dans un plan vertical et/ou
- **en ce que** la plaque de support (5) est munie d'un ou de plusieurs dispositifs de fixation (6).

3. Support de plaque d'immatriculation selon la revendication 1 ou 2,
**caractérisé en ce que**
- la partie de fixation (10) est fixée axialement par rapport à l'axe de rotation (13) dans sa position de fixation au moyen d'une vis (11) sur la partie de base (9), et/ou
- **en ce que** la vis (11) s'étend coaxialement par rapport à l'axe de rotation (13) et/ou
- **en ce que** la vis (11) présente une tête de vis (12) qui est accessible au niveau d'un côté avant (7) de la plaque de support (5) opposé à la région d'immatriculation (3) dans l'état monté du support de plaque d'immatriculation (4), pour faire tourner la vis (11), et/ou
- **en ce que** la partie de base (9), au niveau d'un côté arrière (8) de la plaque de support (5) tourné vers la région d'immatriculation (3) dans l'état monté du support de plaque d'immatriculation (4) fait saillie depuis cette plaque de support, et/ou
- la partie de base (9) présente une ouverture de passage (21) pour la vis (11) et/ou
- **en ce que** la partie de base (9) présente sur le côté avant (7) de la plaque de support (5) une ouverture borgne (20) dans laquelle une tête de vis (12) de la vis (11) est enfoncée lorsque la plaque de support (5) est fixée sur le véhicule (1).

4. Support de plaque d'immatriculation selon l'une quelconque des revendications 1 à 3, **caractérisé en ce que**
- la partie de fixation (10) est retenue de manière imperdable sur la partie de base (9) et/ou
- **en ce que** la partie de fixation (10) est retenue sur la partie de base (9) au moyen d'un enclipsage (23) axial par rapport à l'axe de rotation (13) et/ou
- **en ce que** la partie de fixation (10) peut être fixée sur la partie de base (9) au moyen d'une vis (11) et si la vis (11) est absente ou n'est pas vissée, est disposée sur la partie de base (9) de manière déplaçable axialement par rapport à l'axe de rotation (13).

5. Support de plaque d'immatriculation selon l'une quelconque des revendications 1 à 4,
**caractérisé en ce que**
- une butée rotative (30, 26 ; 35, 37) associée à la position de départ est réalisée sur la partie de base (9) et/ou sur la partie de fixation (10), et/ou
- **en ce qu'**une butée rotative (30, 26 ; 35, 37) associée à une position de fixation est réalisée sur la partie de base (9) et/ou sur la partie de fixation (10), et/ou
- **en ce qu'**un encliquetage rotatif (31) associé à la position de départ est réalisé sur la partie de base (9) et/ou sur la partie de fixation (10) ou est réalisé en tant qu'encliquetage correspondant, et/ou
- **en ce que** l'encliquetage rotatif (31) sur la partie de base (9) ou sur la partie de fixation (10) présente au moins une ouverture d'encliquetage (33) et sur l'autre partie respective (9, 10) au moins un ergot d'encliquetage (32) complémentaire de l'ouverture d'encliquetage (33), et/ou
- **en ce que** la partie de fixation (10) peut être fixée au moyen d'une vis (11) sur la partie de base (9), l'encliquetage rotatif (31) étant dimensionné de telle sorte qu'il puisse être surmonté par vissage de la vis (11).

6. Support de plaque d'immatriculation selon l'une quelconque des revendications 1 à 5,
**caractérisé en ce que**
- la partie de base (9) présente un cylindre (34) duquel dépasse radialement au moins une saillie (35), et/ou
- **en ce que** la partie de fixation (10) présente une douille (36) enfoncée sur le cylindre (34), qui présente au moins une ouverture de coulisse (37) limitée axialement et circonférentiellement, dans laquelle la saillie (35) pénètre radialement, et/ou
- **en ce que** l'ouverture de coulisse (37) respective est dimensionnée de telle sorte qu'elle constitue avec la saillie associée (35) une butée rotative associée à la position de départ et/ou une butée rotative associée à la position de fixation et/ou un encliquetage rotatif (31) associé à la position de départ.

7. Support de plaque d'immatriculation selon l'une quelconque des revendications 1 à 5,
**caractérisé en ce que**
- la partie de base (9) présente une portion de cylindre (28) de laquelle dépasse radialement au moins une nervure axiale (30) et/ou
- **en ce que** la partie de fixation (10) présente au moins deux segments de douille (26) enfoncés sur la portion de cylindre (28), dont au moins un coopère avec l'au moins une nervure axiale (30) pour créer une butée rotative associée à la position de départ et/ou à la position de fixation, et/ou
- **en ce qu'**au moins l'un des segments de douille (26) présente radialement à l'extérieur un contour d'enclipsage (27) et/ou
- **en ce que** la partie de base (9) présente au moins un bras d'enclipsage (24) radialement élastique à ressort et saillant axialement, qui présente radialement à l'intérieur un ergot d'enclipsage (25) complémentaire au contour d'enclipsage (27), qui vient en prise par l'arrière avec le contour d'enclipsage (27).

8. Véhicule, notamment véhicule automobile léger, comprenant au moins une région d'immatriculation (3) prévue pour monter une plaque d'immatriculation de véhicule, dans laquelle un support de plaque d'immatriculation (4) selon au moins l'une quelconque des revendications 1 à 7 est fixé sur le véhicule (1).

9. Véhicule selon la revendication 8,
**caractérisé en ce que**
- la région d'immatriculation (3) n'est pas reconnaissable en tant que telle lorsque le support de plaque d'immatriculation (4) est absent, et/ou
- **en ce que** le contour de fixation (15) du véhicule (1) est formé par des régions fixées au véhicule et de toute façon prévues sur le véhicule (1), et/ou
- **en ce que** la région d'immatriculation (3) est formée par une grille de refroidissement (2) ou une partie de la grille de refroidissement (2), dont les nervures (16, 17) servent de contour de fixation pouvant être engagé par l'arrière, et/ou
- **en ce que** le support de plaque d'immatriculation (4) peut être enfoncé avec les parties de fixation (10) déplacées dans leur position de départ à travers des fentes du refroidisseur (18), qui sont à chaque fois encadrées par des nervures verticales adjacentes (16) et des nervures horizontales adjacentes (17).
